# EUROPEAN PATENT APPLICATION

(11) **EP 4 354 586 A1**
(43) Date of publication of application: **17.04.2024**
(21) Application number: 23201670.9
(22) Date of filing: 04.10.2023
(51) Int. Cl.: H01M 10/42, H01M 10/48, H01M 50/267, H01M 50/269, H01M 50/284, H01M 50/342, H01M 50/509, H01M 50/574, H01M 50/581, H01M 50/583

(54) **BATTERY PACK**

(30) Priority: 12.10.2022 CN 202211247598
(71) Applicant: Techtronic Cordless GP, Anderson, SC 29621 (US)
(72) Inventor: ZHANG, Yi, Dongguan City (CN); JIA, Yun Yan, Dongguan City (CN); ZHOU, Si Xing, Dongguan City (CN); CHEN, Jia Wei, Dongguan City (CN)
(74) Representative: Meissner Bolte Partnerschaft mbB

(57) **Abstract**

The present invention provides a battery pack, comprising a first cell and a second cell connected in series, the first cell having a current cut-off device and having a first failure voltage, the current cut-off device being configured to be able to break a circuit in response to a voltage value of the first cell reaching or exceeding the first failure voltage, and the second cell having no current cut-off device. According to the technical solution of the present invention, the battery pack may use a soft pack battery as the second cell, having advantages such as high energy density, low impedance, high discharge power, a low rate of temperature rise during high-rate discharge, and flexibility in dimensions. At the same time, a cylindrical battery may be used as the first cell; this has a built-in current cut-off device, so can mitigate the problem of soft pack batteries being susceptible to overcharging and consequent thermal runaway, thus improving safety.

## Description

### Technical Field

The present invention relates to a battery pack, in particular to a battery pack capable of improving the safety of soft pack batteries.

### Background Art

Rechargeable secondary batteries are generally at risk of overcharging, i.e. continuing to charge at a high voltage after the battery has reached a normal full state. Overcharging will result in increased pressure inside the battery, battery deformation and liquid leakage, etc., and in severe cases may even cause the battery to burn or go on fire. Soft pack batteries lack a high-strength casing and thus cannot be equipped with a mechanical safety device, and have to rely on a control circuit board to monitor charging parameters (e.g. battery voltage) and stop charging when overcharging is judged to have occurred, or to detect the degree of swelling of the soft pack battery and thereby judge whether overcharging has occurred. Such a method of control is not very reliable and has a high cost. More importantly, when an electronic component fails or develops a fault, these protection measures cannot guarantee safety protection for the soft pack battery. This will result in an unacceptable safety risk.

However, compared with other types of batteries, multi-tab soft pack batteries have various advantages, such as lower impedance and higher discharge power, with higher energy retention in the charge-discharge cycle, and a low rate of temperature rise during high-rate discharge. Thus, it is hoped to provide a solution capable of increasing the safety of a soft pack battery at a low cost while making effective use of its own advantages.

### Summary of the Invention

An objective of the present invention is to provide a battery pack, which is capable of improving the safety of soft pack batteries while fully exploiting the advantages of soft pack batteries, such as high discharge power, high energy retention and a low rate of temperature rise.

According to one aspect of the present invention, the battery pack comprises a first cell and a second cell connected in series, the first cell having a current cut-off device and having a first failure voltage, the current cut-off device being configured to be able to break a circuit in response to a voltage value of the first cell reaching or exceeding the first failure voltage, and the second cell having no current cut-off device.

In some embodiments, the current cut-off device can only break the circuit once.

In some embodiments, the battery pack further comprises a controller and a temperature sensor, the temperature sensor being used to detect a first temperature of the first cell and a second temperature of the second cell, and the controller being able to interrupt an electric circuit of the first cell and the second cell according to the first temperature and/or the second temperature.

In some embodiments, the battery pack further comprises a current sensor for detecting a current of the first cell and the second cell, the controller being able to interrupt the electric circuit of the first cell and the second cell according to the current.

In some embodiments, the battery pack further comprises a voltage sensor for detecting a voltage of the first cell and the second cell, the controller being able to interrupt an electric circuit of the first cell and the second cell according to the voltage.

In some embodiments, the capacity of the second cell is greater than or equal to the capacity of the first cell.

In some embodiments, the first cell comprises multiple first cells connected in parallel, wherein the capacity of the first cells after parallel connection is substantially equal to or close to the capacity of the second cell.

In some embodiments, the difference between the nominal voltages of the first cell and the second cell is less than or equal to 10 mV.

In some embodiments, the resistance value of the first cell is greater than or equal to the resistance value of the second cell. In an embodiment, the first cell comprises multiple first cells connected in parallel, wherein the internal resistance of the first cells after parallel connection is substantially equal to the internal resistance of the second cell.

In some embodiments, the first cell and the second cell are lithium nickel manganese cobalt oxide batteries, lithium cobalt oxide batteries, lithium iron phosphate batteries or nickel metal hydride batteries. Preferably, the first cell and the second cell use the same positive electrode material.

In some embodiments, the temperature-rise coefficient of the first cell is greater than or equal to the temperature-rise coefficient of the second cell.

In some embodiments, a failure temperature of the first cell is less than or equal to a failure temperature of the second cell, and/or a failure voltage of the first cell is less than or equal to a failure voltage of the second cell.

In some embodiments, at least two said first cells are connected in parallel and then connected in series with the second cell, or at least two said second cells are connected in parallel and then connected in series with the first cell, or at least two said first cells are connected in parallel and then connected in series with at least two said second cells connected in parallel.

In some embodiments, the first cell comprises a cylindrical battery.

In some embodiments, the second cell comprises at least one of a soft pack battery and a prismatic battery.

In some embodiments, the battery pack comprises a housing accommodating the first cell and the second cell, the housing forming a first chamber accommodating the first cell and a second chamber accommodating the second cell.

In some embodiments, the housing is provided with a separating wall, the first chamber and the second chamber being separated by the separating wall.

In some embodiments, the battery pack comprises a control circuit board, the control circuit board being disposed in the second chamber.

From the perspective of technical effect, the battery pack according to the present invention has the advantages of soft pack batteries and cylindrical batteries. A soft pack battery may be used as the second cell, so that the battery pack has advantages such as high energy density, low impedance, high discharge power, and a low rate of temperature rise during high-rate discharge. At the same time, a cylindrical battery is used as the first cell; this has a built-in current cut-off device, so can mitigate the problem of soft pack batteries being susceptible to overcharging and consequent thermal runaway, thus improving safety.

### Brief Description of the Drawings

To better understand the above and other objectives, features, advantages and functions of the present invention, reference may be made to the preferred embodiments shown in the drawings. In the drawings, identical reference symbols denote identical components. Those skilled in the art should understand that the drawings are intended to illustrate preferred embodiments of the present invention schematically, and have no limiting effect on the scope of the present invention, and the various components in the drawings are not drawn to scale.
Fig. 1 is a 3D drawing of a first cell for a battery pack according to the present invention.
Fig. 2 is a sectional view taken along line A-A in Fig. 1.
Fig. 3 is a 3D drawing of a second cell for a battery pack according to the present invention.
Fig. 4 is a schematic drawing of a battery pack according to the present invention.
Figs. 5a and 5b are schematic connection drawings of battery packs according to first and second embodiments of the present invention respectively, wherein three first cells and two second cells are connected in series to form a battery pack.
Fig. 6 is a schematic connection drawing of a battery pack according to a third embodiment of the present invention, wherein one first cell and one second cell are connected in series to form a battery pack.
Fig. 7 is a schematic connection drawing of a battery pack according to a fourth embodiment of the present invention, wherein two first cells are connected in parallel and then connected in series with one second cell to form a battery pack.
Figs. 8a and 8b are schematic connection drawings of battery packs according to fifth and sixth embodiments of the present invention respectively, wherein six first cells form a 2S3P battery pack, which is then connected in series with two second cells to form a battery pack.
Figs. 9a and 9b are pictures of the state of a battery pack consisting solely of second cells before and after an overcharging test.

Key to the drawings:
- 1/100/200/300/400/500/600: battery pack
- 10: first cell
- 11: housing
- 12: electric terminal
- 13: cell
- 14: negative electrode collector
- 15: positive electrode collector
- 16: current cut-off device
- 20: second cell
- 21: positive tab
- 22: negative tab
- 30: battery pack housing
- 31: first chamber
- 32: second chamber
- 33: separating wall
- 40: control circuit board

### Detailed Description of the Invention

Specific embodiments of the present invention are now described in detail by referring to the drawings. The embodiments described herein are merely preferred embodiments of the present invention. Based on these preferred embodiments, those skilled in the art will be able to think of other ways in which the present invention could be implemented, all of which likewise fall within the scope of the present invention.

The present invention provides a battery pack, which can be used to supply power to apparatuses such as electric tools, household cleaning appliances, kitchen equipment or medical equipment. The battery pack comprises at least two types of cell. One type of cell has a built-in current cut-off device, and when the voltage of the cell (e.g. in a charging state) reaches or exceeds a failure voltage thereof, the current cut-off device can break a circuit in response to this situation, disconnecting a charging current or discharge current, to prevent the temperature of the cell from continuing to rise and cause danger. This type of cell may be called a first cell, and the failure voltage to which the current cut-off device responds may be called a first failure voltage. The first cell may for example be a cylindrical cell, etc.

Unlike the cell described above, the other type of cell has no current cut-off device, and may specifically be for example a soft pack battery, prismatic battery, etc. Corresponding to the first cell, this other type of cell may be called a second cell, and a thermal runaway voltage thereof may be called a second failure voltage. In addition, the second failure voltage may be understood to be a safe voltage threshold; when the cell voltage is lower than the second failure voltage, it is in a safe state and will not go on fire or explode, but when the cell voltage exceeds the second failure voltage, this is likely to cause thermal runaway (i.e. a cumulative intensifying effect on cell temperature that occurs with sustained charging, and gradually damages the physical structure of the cell), and in severe cases may even cause dangerous situations such as the cell going on fire or exploding. In some embodiments, the second cell may not provide the second failure voltage, or the second failure voltage is much higher than the first failure voltage. Failure protection for the second cell may rely on the current cut-off device of the first cell and/or a battery management system (BMS) of the battery pack.

According to the present invention, the first cell and second cell are connected in series in the battery pack, and are configured such that under constant-current charging conditions, the time taken for the voltage of the first cell to rise to the first failure voltage is shorter than the time taken for the voltage of the second cell to rise to the second failure voltage. In this way, when being charged at the same time, the first cell can enter an overcharged or thermal runaway state before the second cell overcharges. Thus, before the voltage of the second cell rises to an overcharged or thermal runaway state, the current cut-off device of the first cell can complete an action of cutting off current, e.g. form an open circuit by breakage of its own weakened part. This causes the charging current flowing through the second cell to be cut off, reducing the possibility of the second cell being charged to the second failure voltage and experiencing thermal runaway. A specific method of causing the first cell to enter an overcharged or thermal runaway state before the second cell connected in series therewith may be as follows: the first failure voltage may be set less than the second failure voltage, and/or the rate of voltage increase of the first cell is set greater than the rate of voltage increase of the second cell, etc.

In the battery pack according to the present invention, although the second cell has no current cut-off device, it can utilize the current cut-off device of the first cell as a safety device for preventing overcharging or thermal runaway of the second cell, by means of series connection and rational parameter configuration. The second cell having no current cut-off device may be a soft pack battery, prismatic battery, etc. Thus, the advantages of soft pack batteries, such as high energy density, low impedance, high discharge power and a low rate of temperature increase during high-rate discharge, are utilized effectively while mitigating the problem of soft pack batteries being susceptible to overcharging and consequent thermal runaway, thus improving safety.

Preferably, when the first cell and second cell are grouped to form the battery pack, the nominal voltage of the first cell may be chosen to be less than or equal to the nominal voltage of the second cell, and the difference in nominal voltage therebetween may be set less than or equal to 10 mV. Preferably, the nominal voltage of the first cell may be equal to the nominal voltage of the second cell. In addition, the capacity of the second cell may be set greater than or equal to that of the first cell. Preferably, the capacity of the second cell is equal to or slightly greater than the capacity of the first cell. Preferably, the first cell and second cell are rechargeable cells.

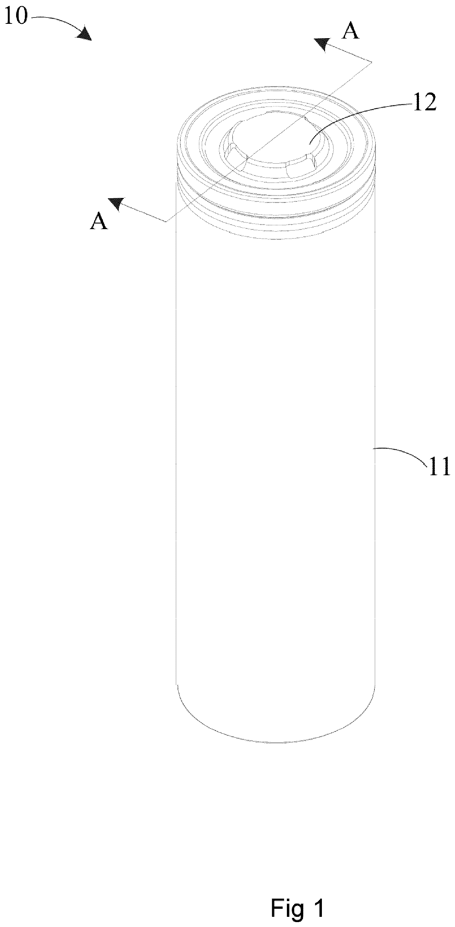

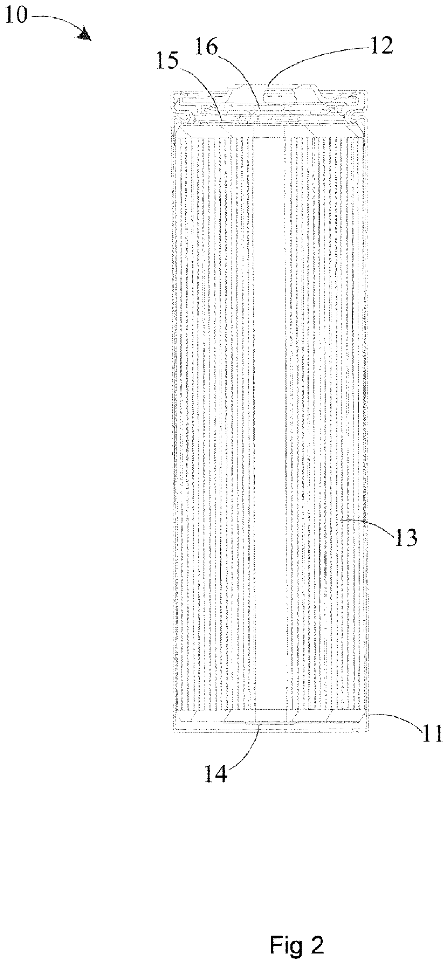

Figs. 1 and 2 show an example of a first cell 10, comprising necessary structures such as a housing 11, an electric terminal 12, a cell 13, a negative electrode collector 14, a positive electrode collector 15, a current cut-off device 16 and an insulating layer (not shown). The cell 13 is a cylindrical structure formed by lamination or winding of a positive electrode sheet, a negative electrode sheet and a separator therebetween, and the interior thereof is filled with electrolyte (not shown). The cell 13 is disposed in the housing 11. The housing 11 may be made of an electrically conductive material such as steel or aluminium. In addition to serving a supporting function and an accommodating function, the housing 11 may also be electrically connected to the negative electrode sheet of the cell 13 via the negative electrode collector 14 disposed at a lower end of the cell 13, forming a negative electrode terminal of the first cell 10, for electrical connection to an external device. The positive electrode collector 15 is installed at an upper end of the cell 13, and electrically connected to the positive electrode sheet. The electric terminal 12 is electrically connected to the positive electrode collector 15, forming a positive electrode terminal of the first cell 10. To avoid internal short circuits, an insulating layer is further provided between the housing 11 and the cell 13 and between the housing 11 and the electric terminal 12, for insulating isolation. In an embodiment, the nominal voltage of the first cell 10 is 3.6 V. It must be noted that batteries of different materials have different nominal voltages. A common 18650 lithium ion battery has a nominal voltage of approximately 3.7 V and a charging cut-off voltage of approximately 4.2 V, and the failure voltage thereof may be approximately 5.1 V. Thus, approximately 3.6 V is merely used as an example, and is not to be regarded as a limitation on the present invention. The failure voltage depends on the setting of the current cut-off device. Thus, approximately 5.1 V is merely used as an example, and is not to be regarded as a limitation on the present invention.

The current cut-off device 16 is connected between the electric terminal 12 and the positive electrode collector 15. For example, the current cut-off device 16 may maintain tight contact with the electric terminal 12 through clamping/pressing by the housing 11 so as to form an electrical connection, and may be connected to the positive electrode collector 15 by soldering. The current cut-off device 16 isolates the interior space of the first cell 10 from the outside environment; an inner side thereof sustains gas pressure of the battery interior, and an outer side sustains gas pressure of the outside environment. The current cut-off device 16 is provided with a weakened part between a part connected to the positive electrode collector 15 and a part connected to the electric terminal 12. When the voltage and/or internal temperature of the first cell 10 rises to or even exceeds a safe threshold (e.g. the first failure voltage) due to, for example, a short circuit, overcharging or another reason, increased gas pressure can develop in the interior thereof, and consequently a large pressure difference forms between the inner and outer sides of the current cut-off device 16. When the pressure difference exceeds the structural strength of the weakened part, the weakened part breaks, breaking the electrical connection between the electric terminal 12 and the positive electrode collector 15, thus forming an open circuit so that charging stops, preventing the temperature of the first cell 10 from continuing to rise.

An example of the current cut-off device has been given above. It will be understood that any current cut-off device suitable for a battery is suitable for the battery pack according to the present invention.

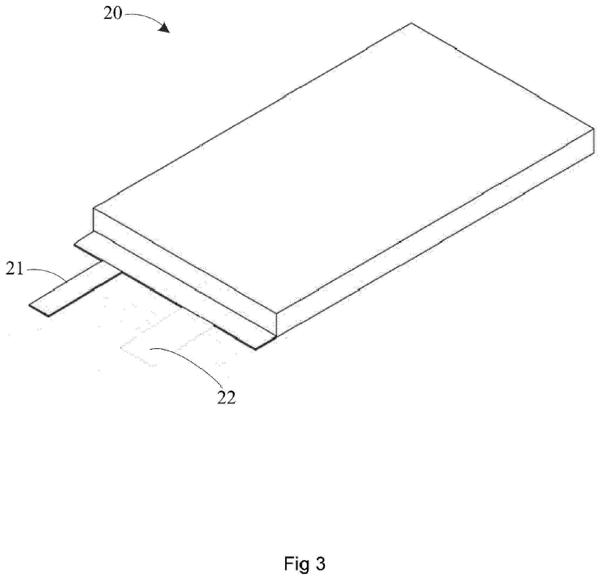

Fig. 3 shows an example of a second cell 20, which may be a soft pack battery, in which battery materials such as positive/negative electrodes, electrolyte and a separator are encapsulated by a non-rigid encapsulating material such as aluminium-plastic composite film, and which is provided with a positive tab 21 and a negative tab 22 for electrical connections. The second cell 20 does not comprise a built-in current cut-off device.

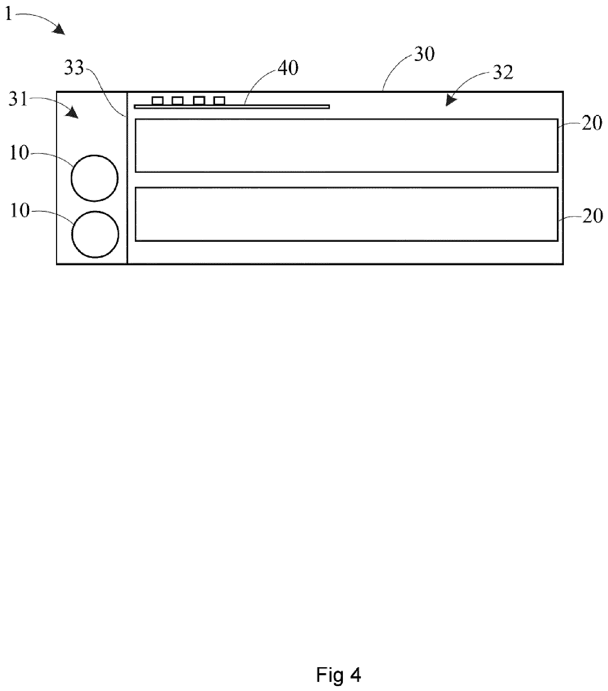

Fig. 4 shows a preferred embodiment of a battery pack according to the present invention, the battery pack 1 comprising two first cells 10 and two second cells 20. These cells are electrically connected to each other in series/parallel, and encapsulated in a battery pack housing 30. For example, each first cell 10 and each second cell 20 may be connected in series, and then connected in parallel. Alternatively, the four cells are connected in series. Here, the choice may be made according to the desired battery pack voltage and capacity. In another embodiment, one first cell 10 may be connected in series with multiple second cells 20.

In addition, a control circuit board (PCB) 40 is further provided in the battery pack housing 30, for controlling operations such as charging and discharging of the battery pack. The control circuit board 40 may comprise a controller, for controlling charging/discharging of the battery pack and the cells. The battery pack housing 30 may comprise a first chamber 31 and a second chamber 32. The first chamber 31 and second chamber 32 may be separated by a separating wall 33. The first cell 10 is accommodated in the first chamber 31, and the second cell 20 is accommodated in the second chamber 32. An advantage of this is that when the first cell 10 fails, the failed first cell 10 will not easily affect the second cell 20.

In some embodiments, the battery pack 1 further comprises a temperature sensor (not shown) for detecting a first temperature of the first cell 10 and a second temperature of the second cell 20. A specific example of the temperature sensor may be an NTC. The temperature sensor may comprise a first temperature sensor disposed in the first chamber 31 and a second temperature sensor disposed in the second chamber 32. The temperature sensors may be arranged in close contact with the cells, to detect the temperature of the cells. The controller can interrupt the electric circuits of the first cell 10 and the second cell 20 according to the first temperature and/or second temperature exceeding a predetermined temperature value.

In some embodiments, the battery pack further comprises a current sensor (not shown), for detecting currents of the first cell 10 and second cell 20. The current sensor may be disposed in a current circuit, and the controller can interrupt the electric circuits of the first cell 10 and the second cell 20 according to a current detected by the current sensor exceeding a predetermined current value. For example, when the detected current flowing through the first cell 10 exceeds a first threshold, the controller can interrupt the electric circuit, for example by means of a MOSFET. When the detected current flowing through the second cell 20 exceeds a second threshold, the controller can interrupt the electric circuit, for example by means of a MOSFET.

In some embodiments, the battery pack further comprises a voltage sensor, for detecting voltages of the first cell 10 and second cell 20, and the controller can control charging/discharging of the battery pack according to a voltage detected by the voltage sensor. For example, when the detected voltage is lower than a predetermined threshold, discharging of the battery pack is interrupted. When the detected voltage is higher than a predetermined threshold, charging of the battery pack is interrupted. When the detected voltage between the cells is abnormal, cell balancing is performed or a cell abnormality signal is issued.

The control circuit board 40 is preferably disposed in the second chamber 32. Since the temperature-rise coefficient of the first cell 10 is higher than or equal to the temperature-rise coefficient of the second cell 20, the temperature of the first cell 10 might rise higher than the temperature of the second cell 20. That is to say, the temperature of the first chamber 32 might be higher than the temperature of the second chamber 32. Having the control circuit board 40 disposed in the second chamber 32 can shield electronic devices on the control circuit board 40 from the effects of possible high temperature in the first chamber 32.

In some embodiments, the first cell 10 and second cell 20 are substantially matched, i.e. the charge/discharge characteristics of the first cell and second cell are substantially identical. For example, the charge/discharge curves of the first cell and second cell are substantially identical. Preferably, the first cell 10 and second cell 20 have substantially identical chemical systems; they may both be ternary lithium batteries (lithium nickel manganese cobalt oxide), lithium cobalt oxide batteries, lithium iron phosphate batteries or nickel metal hydride batteries, etc. Optionally, the first cell 10 and second cell 20 use the same positive electrode material, for example NCM positive electrode material. Optionally, the temperature-rise coefficient of the first cell 10 is greater than or equal to the temperature-rise coefficient of the second cell 20.

To make fuller use of cell capacity, optionally, the capacities of the first cell 10 and second cell 20 may be substantially identical or identical, e.g. 1 Ah, 2 Ah or 3 Ah. Preferably, the nominal voltages of the first cell 10 and second cell 20 are substantially equal. A failure temperature of the first cell 10 is less than or equal to a failure temperature of the second cell 20. Optionally, the internal resistances of the first cell 10 and second cell 20 are substantially equal, or the internal resistance of the first cell 10 is greater than the internal resistance of the second cell 20.

As an example, in order to obtain a battery pack with a voltage of 18 V and a capacity of 3 Ah, five first cells 10 and second cells 20 with nominal voltages of about 3.7 V and capacities of 3 Ah may be chosen. The first cells 10 and second cells 20 are connected in series, to provide a battery pack with a capacity of about 3 Ah and an output voltage of about 18 V.

To ensure the safety of the battery pack, the battery pack needs to be subjected to an overcharging test. The test steps are as follows: first of all, the battery pack is discharged to a cut-off voltage at a first predetermined current (e.g. 0.2 C), then a second predetermined current (e.g. 2 C) is used to charge the battery so that the voltage of a single cell rises to a first predetermined voltage, and constant voltage is maintained for a first predetermined length of time (e.g. 15 min). The first predetermined voltage is higher than the nominal voltage of the cell in a fully charged state; for example, the first predetermined voltage may be 1.5 times the nominal voltage. The first predetermined voltage may be the first failure voltage as mentioned above.

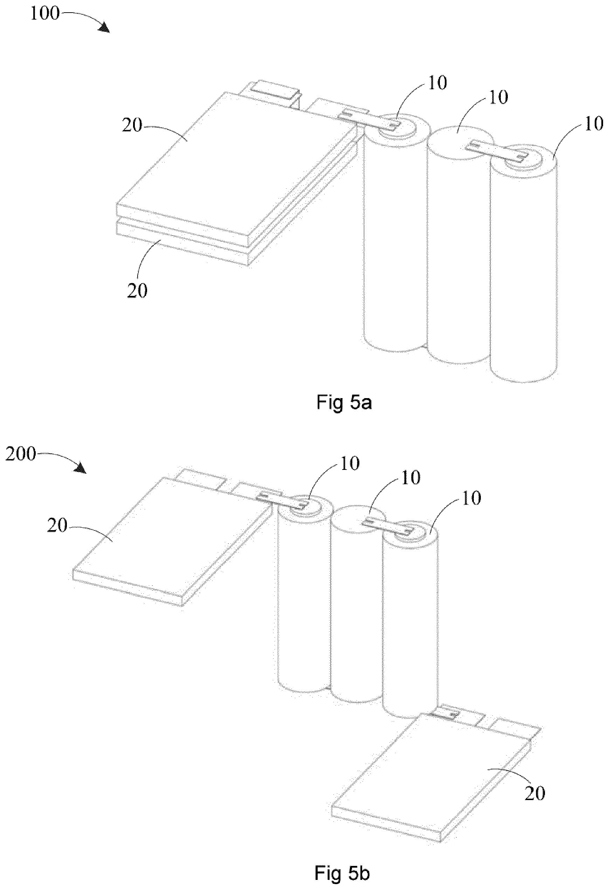

Figs. 5a and 5b show a battery pack 100 according to a first embodiment of the present invention, and a battery pack 200 according to a second embodiment of the present invention, respectively. In both of these embodiments, two second cells 20 and three first cells 10 are grouped in series connection, and the battery pack thus formed may have a voltage of 18 V and a capacity of 3 Ah. When the overcharging test is performed, a current of 0.2 C (0.6 A) is first used to discharge the battery pack, which is ultimately discharged to a 12.5 V state, i.e. the voltage of each cell is 2.5 V. 2 C (6 A) is then used to charge the battery pack, until the voltage of the battery pack is 30 V, i.e. the voltage of each cell is 6 V, and a constant voltage is maintained for 15 min. Experimental results showed that the battery pack safely passed the test, without going on fire or exploding, so met the requirements of safety regulations. Since the current cut-off device of the first cell 10 can be cut off when the first cell 10 reaches the first failure voltage, the entire current circuit is protected.

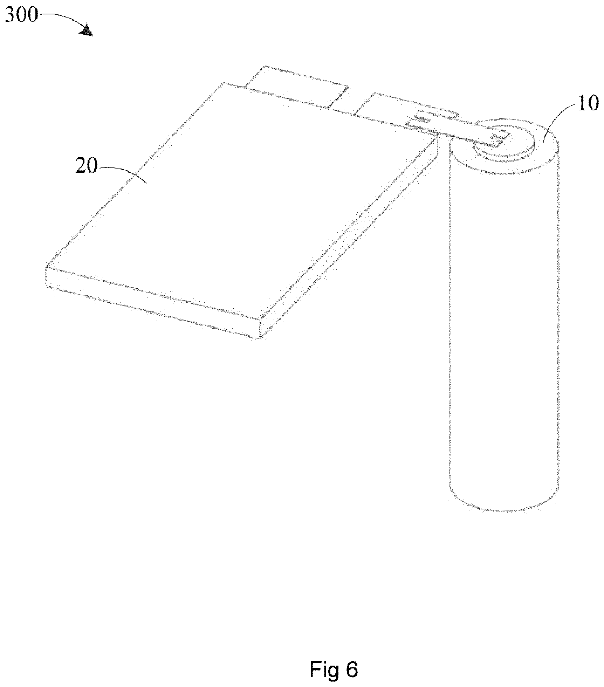

Fig. 6 shows a battery pack 300 according to a third embodiment of the present invention; in this embodiment, one second cell 20 and one first cell 10 are grouped in series connection, and the battery pack thus formed may have a voltage of 8 V and a capacity of 3 Ah. The procedure of the overcharging test is as follows: a current of 0.2 C (0.6 A) is first used to discharge the battery pack, which is ultimately discharged to a 5 V state, i.e. the voltage of each cell is 2.5 V. 2 C (6 A) is then used to charge the battery pack, until the voltage of the battery pack is 12 V, i.e. the voltage of each cell is 6 V, and a constant voltage is maintained for 15 min. Experimental results showed that the battery pack safely passed the test, without going on fire or exploding, so met the requirements of safety regulations. Since the current cut-off device of the first cell 10 can be cut off when the first cell 10 reaches the first failure voltage, the entire current circuit is protected.

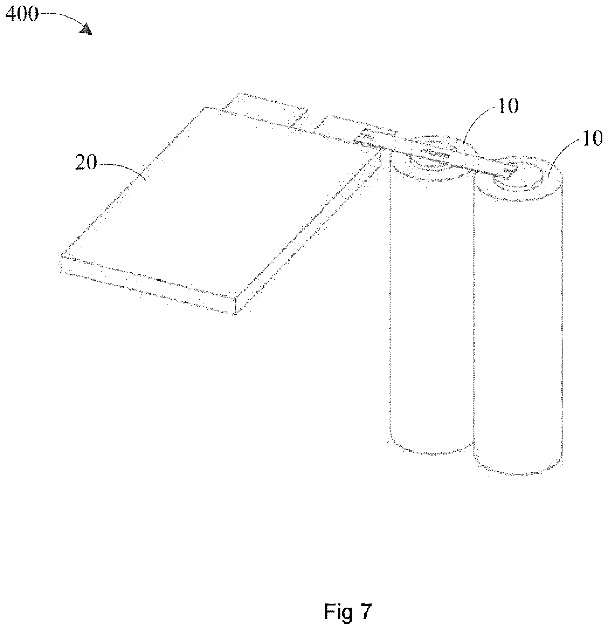

Fig. 7 shows a battery pack 400 according to a fourth embodiment of the present invention; in this embodiment, one second cell 20 and one set of first cells 10 are grouped in series connection, wherein the set of first cells 10 comprises two first cells 10 connected in parallel, and the battery pack thus formed may have a voltage of 8 V and a capacity of 6 Ah. The procedure of the overcharging test is as follows: a current of 0.2 C (0.6 A) is first used to discharge the battery pack, which is ultimately discharged to a 5 V state, i.e. the voltage of each cell is 2.5 V. 2 C (6 A) is then used to charge the battery pack, until the voltage of the battery pack is 12 V, i.e. the voltage of each cell is 6 V, and a constant voltage is maintained for 15 min. Experimental results showed that the battery pack safely passed the test, without going on fire or exploding, so met the requirements of safety regulations. Since the current cut-off device of the first cell 10 can be cut off when the first cell 10 reaches the first failure voltage, the entire current circuit is protected.

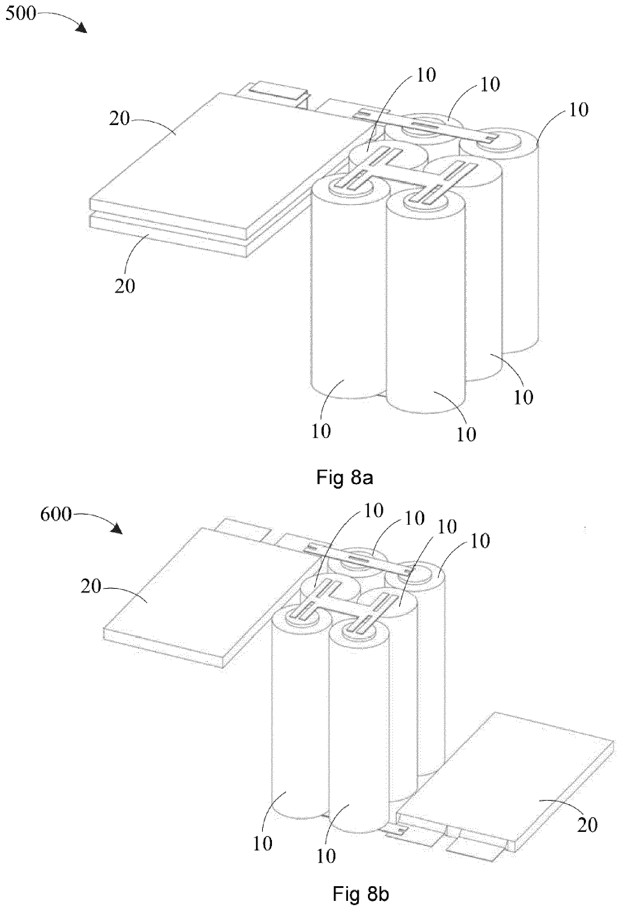

Figs. 8a and 8b show a battery pack 500 according to a fifth embodiment of the present invention, and a battery pack 600 according to a sixth embodiment of the present invention, respectively. In both of these embodiments, two second cells 20 and three sets of first cells 10 are grouped in series connection. Similarly, each set of first cells 10 comprises two first cells 10 connected in parallel. The battery pack thus formed may have a voltage of 18 V and a capacity of 6 Ah. The procedure of the overcharging test is as follows: a current of 0.2 C (0.6 A) is first used to discharge the battery pack, which is ultimately discharged to a 12.5 V state, i.e. the voltage of each cell is 2.5 V. 2 C (6 A) is then used to charge the battery pack, until the voltage of the battery pack is 30 V, i.e. the voltage of each cell is 6 V, and a constant voltage is maintained for 15 min. Experimental results showed that the battery pack safely passed the test, without going on fire or exploding, so met the requirements of safety regulations. Since the current cut-off device of the first cell 10 can be cut off when the first cell 10 reaches the first failure voltage, the entire current circuit is protected.

Although they show series connection of a specific number of first cells and a specific number of second cells, the examples above merely serve an explanatory purpose and should not be regarded as a limitation on the present invention. For example, one first cell connected in series with multiple second cells may be used, or multiple first cells may be connected in series with one second cell. Those skilled in the art can make different selections according to needs.

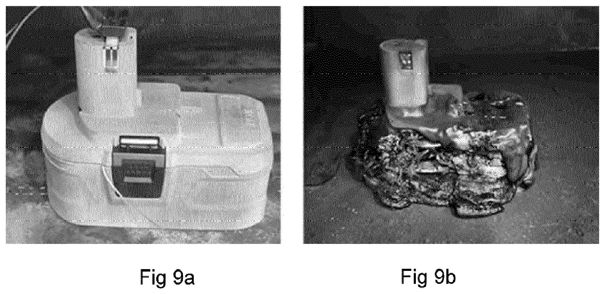

In addition, Figs. 9a and 9b show pictures of the state of a battery pack before and after an overcharging test respectively, the battery pack consisting solely of grouped second cells 20 having no current cut-off devices, wherein the second cells 20 are soft pack batteries having no current cut-off devices. It can be seen that in the procedure of the overcharging test, due to the lack of current cut-off devices, the battery pack was unable to cut off the charging current by breaking the circuit in a high-voltage state; as a result, thermal runaway occurred, and the battery pack went on fire and was destroyed by burning. Thus, comparing Fig. 9b with the overcharging test results for the battery packs in the embodiments above, it can be seen that the battery pack according to the present invention has good safety.

The above description of various embodiments of the present invention is provided for descriptive purposes to a person of ordinary skill in the art. It is not intended that the present invention be exclusive or be limited to a single disclosed embodiment. As mentioned above, those skilled in the art will understand various alternatives and variations of the present invention. Thus, although some alternative embodiments have been specifically described, those skilled in the art will understand, or develop with relative ease, other embodiments. The present invention is intended to include all alternatives, modifications and variants of the present invention described here, as well as other embodiments which fall within the spirit and scope of the present invention described above.

## Claims

1. Battery pack, **characterized in that** the battery pack comprises a first cell (10) and a second cell (20) connected in series, the first cell (10) having a current cut-off device and having a first failure voltage, the current cut-off device being configured to be able to break a circuit in response to a voltage value of the first cell (10) reaching or exceeding the first failure voltage, and the second cell (20) having no current cut-off device.

2. Battery pack according to Claim 1, **characterized in that** the current cut-off device can only break the circuit once.

3. Battery pack according to Claim 1, **characterized in that** the battery pack further comprises a controller and a temperature sensor, the temperature sensor being used to detect a first temperature of the first cell (10) and a second temperature of the second cell (20), and the controller being able to interrupt an electric circuit of the first cell (10) and the second cell (20) according to the first temperature and/or the second temperature.

4. Battery pack according to Claim 3, **characterized in that** the battery pack further comprises a current sensor for detecting a current of the first cell (10) and the second cell (20), the controller being able to interrupt the electric circuit of the first cell (10) and the second cell (20) according to the current; and/or
the battery pack further comprises a voltage sensor for detecting a voltage of the first cell (10) and the second cell (20), the controller being able to interrupt an electric circuit of the first cell (10) and the second cell (20) according to the voltage.

5. Battery pack according to Claim 1, **characterized in that** the capacity of the second cell (20) is greater than or equal to the capacity of the first cell (10).

6. Battery pack according to Claim 1, **characterized in that** the battery pack comprises multiple first cells (10) connected in parallel, wherein the capacity of the first cells (10) after parallel connection is substantially equal to or close to the capacity of the second cell (20).

7. Battery pack according to Claim 1, **characterized in that** the difference between the nominal voltages of the first cell (10) and the second cell (20) is less than or equal to 10 mV.

8. Battery pack according to Claim 1, **characterized in that** the internal resistance of the first cell (10) is greater than or equal to the internal resistance of the second cell (20).

9. Battery pack according to Claim 8, **characterized in that** the battery pack comprises multiple first cells (10) connected in parallel, wherein the internal resistance of the first cells (10) after parallel connection is substantially equal to the internal resistance of the second cell (20).

10. Battery pack according to Claim 1, **characterized in that** the first cell (10) and the second cell (20) are lithium nickel manganese cobalt oxide batteries, lithium cobalt oxide batteries, lithium iron phosphate batteries or nickel metal hydride batteries; preferably, the first cell (10) and the second cell (20) use the same positive electrode material.

11. Battery pack according to Claim 1, **characterized in that** the temperature-rise coefficient of the first cell (10) is greater than or equal to the temperature-rise coefficient of the second cell (20); preferably, a failure temperature of the first cell (10) is less than or equal to a failure temperature of the second cell (20), and/or a failure voltage of the first cell (10) is less than or equal to a failure voltage of the second cell (20).

12. Battery pack according to Claim 1, **characterized in that** at least two said first cells (10) are connected in parallel and then connected in series with the second cell (20), or at least two said second cells (20) are connected in parallel and then connected in series with the first cell (10), or at least two said first cells (10) are connected in parallel and then connected in series with at least two said second cells (20) connected in parallel.

13. Battery pack according to Claim 1, **characterized in that** the battery pack comprises a housing (30) accommodating the first cell (10) and the second cell (20), the housing (30) forming a first chamber (31) accommodating the first cell (10) and a second chamber (32) accommodating the second cell (20).

14. Battery pack according to Claim 13, **characterized in that** the housing (30) is provided with a separating wall (33), the first chamber (31) and the second chamber (32) being separated by the separating wall (33).

15. Battery pack according to Claim 13, **characterized in that** the battery pack comprises a control circuit board (40), the control circuit board (40) being disposed in the second chamber (32).
